# FASCICULE DE BREVET EUROPEEN

(11) **EP 1 667 597 B1**
(45) Date de publication et mention de la délivrance du brevet: **19.10.2011**
(21) Numéro de dépôt: 04742703.4
(22) Date de dépôt: 12.05.2004
(51) Int. Cl.: A61C 1/14

(54) **DISPOSITIF DE PREPARATION CANALAIRE**
VORRICHTUNG ZUR ERWEITERUNG DES WURZELKANALS
DEVICE FOR CANAL PREPARATION

(30) Priorité: 04.08.2003 FR 0309593
(43) Date de publication de la demande: 14.06.2006
(73) Titulaire: MICRO MEGA INTERNATIONAL MANUFACTURES, 25000 Besançon (FR)
(72) Inventeur: BADOZ, Jean-Marie, F-25300 Doubs (FR); PERNOT, Jacques, F-25870 Vieilley (FR)
(74) Mandataire: Poupon, Michel
(86) Numéro de dépôt international: PCT/FR2004/001147
(87) Numéro de publication internationale: WO 2005/023134

(56) Documents cités:
- WO-A-94/15541
- US-A- 4 268 252
- US-A- 5 120 220
- US-A- 5 730 595
- US-A- 6 155 827

## Description

La présente invention a pour objet un dispositif de préparation canalaire.

On connaît déjà divers instruments permettant la préparation canalaire dans l'art antérieur. Ces instruments peuvent être utilisés manuellement ou par un système mécanique, par un fonctionnement en rotation continue ou alternée. Ils permettent la préparation ou l'alésage de canaux dentaires.

Le mouvement de rotation de ce type d'instrument est permis grâce à une pièce en contre-angle sur laquelle est positionné l'instrument. Cet instrument est généralement muni d'un manche, défini par la norme ISO 1797, pénétrant dans la tête du contre-angle, qui est elle-même pourvue de moyens mécaniques permettant la fixation amovible de l'instrument.

Dans ce type d'instrument de l'art antérieur, l'utilisateur doit ôtera l'instrument du manche à chaque changement d'opération, ce qui augmente les risques de piqûre, et par conséquent les risques de contamination pour l'utilisateur et le patient.

Par ailleurs, l'utilisateur entre en contact direct avec l'instrument lors de sa mise en place sur le contre-angle. De ce fait, l'instrument est contaminé, ce qui augmente les risques de développement microbien lors du traitement du canal dentaire.

De plus, les moyens de serrage de l'instrument sur le contre-angle sont volumineux, ce qui empêche l'utilisation de têtes de petite taille, et donc limite la visibilité de l'utilisateur.

US-A-5 120 220 montre un dispositif dentaire pour polir la surface d'une dent où un instrument de polissage est engagé dans un contre-angle par un mécanisme d'encliquetage.

L'invention se propose de fournir un dispositif de préparation canalaire permettant de remédier à ces divers inconvénients.

A cet effet, la présente invention a pour objet un dispositif de préparation canalaire comprenant un support (1), un instrument de traitement (2) muni d'un manche (3), d'un contre-angle (4) muni d'une tête (5), **caractérisé en ce que** le manche (3) de l'instrument canalaire (2) est équipé d'un moyen d'entraînement en rotation (6) et que la tête (5) du contre-angle est pourvue à sa base d'un moyen d'encliquetage coopérant avec le manche (3) du moyen d'entraînement en rotation de telle sorte que par simple appui, le manche (3) du moyen d'entraînement en rotation (6) étant engagé dans la tête (5), l'encliquetage du manche (3) et de la tête (5) est assuré.

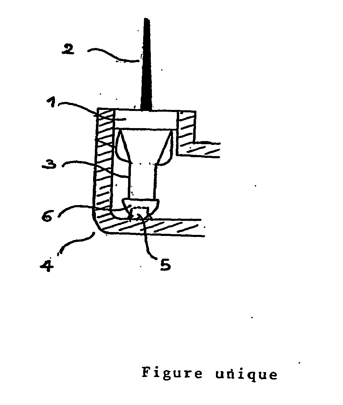

On comprendra mieux l'invention à l'aide de la description faite ci-après en référence au dessin annexé sur lequel il est représenté un dispositif de préparation canalaire.

Le dispositif de préparation canalaire est constitué d'un support (1), pour les instruments de traitement, et d'instruments de traitement (2) munis d'un manche (3). Ces derniers sont interchangeables selon les besoins de l'utilisateur.

Le manche des instruments (3) est muni d'un moyen d'entraînement en rotation (6) qui va, en collaboration avec la tête (5) du contre-angle (4), assurer le mouvement de rotation.

Selon une caractéristique avantageuse de l'invention, ce moyen d'entraînement en rotation (6) sera un pignon.

La tête (5) du contre-angle (4) est pourvue à sa base d'un moyen d'encliquetage. Ce dernier va coopérer avec le manche de l'instrument assurant la rotation. Ainsi, par simple appui, lors de l'engagement du manche (3) dans la tête (5), l'instrument devient solidaire de la tête (5) du contre-angle (4).

Par ailleurs, la tête (5) du contre-angle (4) est constituée d'une matière souple, qui va permettre la déformation de la tête (5) à sa base.

Ainsi, lors de l'appui du manche (3) de l'instrument sur la tête (5) du contre-angle (4), une forme en losange permet le passage du manche de l'instrument dans la tête (5) du contre-angle (4).

Pour sortir le manche (3) de l'instrument de la tête (5) du contre-angle (4), il suffit d'appuyer sur la tête (5) suivant la grande diagonale du losange, ce qui libérera le mécanisme d'encliquetage.

Selon une caractéristique avantageuse de l'invention, la lame constituant les instruments de traitement sera en acier, ce qui constitue une limitation des coûts dans la mesure où elle sera ainsi à usage unique.

Selon une autre caractéristique avantageuse de l'invention, la tête (5) du contre-angle sera également réalisée en une matière permettant un usage unique.

Le dispositif de préparation canalaire selon l'invention présent un avantage économique dans la mesure où les instruments et la tête du contre-angle sont réalisés de manière à pouvoir être utilisés une seule fois.

Par ailleurs, l'utilisateur de ce dispositif évitera la contamination des instruments par l'intermédiaire de ses mains dans la mesure où le changement de l'instrument est réalisé par l'intermédiaire de la tête du contre-angle, et non par un contact direct de la main de l'utilisateur sur la lame de l'instrument.

Bien que l'invention ait été décrite avec des moyens de réalisation particuliers, elle comprend tous les équivalents techniques des moyens décrits.

## Revendications

1. Dispositif de préparation cana!a<re comprenant un support (1), un instrument de traitement sanalaire (2) muni d'un manche (3), et un contre-angle (4) pourvu d'une tête (5), et dans lequel le manche (3) de l'instrument canalaire (2) est équipé d'un moyen d'entraînement en rotation(6) et que la tête (5) du contre-angle (4) est pourvue à sa base d'un moyen d'encliquetage coopérant avec le manche (3) du moyen d'entraînement en rotation de telle sorte que par simple appui, le manche (3) du moyen d'entraînement en rotation (6) étant engagé dans la tête, l'encliquetage du manche (3) et de la tête (5) est assuré.

2. Dispositif de préparation canalaire selon la revendication 1, **caractérisé en ce que** la tête (5) du contre-angle (4) est réalisée en un matériau permettant sa déformation à sa base.

3. Dispositif de préparation canalaire selon l'une des revendications précédentes **caractérisé en ce qu'**une forme ovale ou losange permette le passage du manche (3) de l'instrument (2) lors de l'appui de l'instrument sur la tête (5) du contre-angle (4).

4. Dispositif de préparation canalaire selon l'une des revendications précédentes, **caractérisé en ce que** la tête (5) a une forme de losange ou d'ovale permettant le dégagement du moyen d'encliquetage lors de l'appui de la tête (5) sur ce dernier.

5. Dispositif de préparation canalaire selon l'une des revendications précédentes **caractérisé en ce que** l'instrument (2) peut être en acier.

6. Dispositif de préparation canalaire selon l'une des revendications précédentes **caractérisé en ce que** la tête (5) du contre-angle (4) est réalisée dans une matière permettant un usage unique.

7. Dispositif de préparation canalaire selon l'une des revendications précédentes, **caractérisé en ce que** le moyen d'entraînement en rotation (6) peut être un pignon.

## Claims

1. Canal preparation device comprising a support (1), a canal treatment instrument (2) provided with a shaft (3) and a contra-angle (4) provided with a head (5), and in which the shaft (3) of the canal instrument (2) is provided with a rotational drive (6), and in which the head (5) of the contra-angle (4) is provided at its base with a snap-fastening connection cooperating with the shaft (3) of the rotational drive, such that by means of simple bearing, with the shaft (3) of the rotational drive (6) being engaged in the head, the snap-fastening connection of the shaft (3) and the head (5) is ensured.

2. Canal preparation device according to claim 1, **characterised in that** the head (5) of the contra-angle (4) is made from a material which can be deformed at its base.

3. Canal preparation device according to any one of the preceding claims, **characterised in that** an oval or diamond shape allows the passage of the shaft (3) of the instrument (2) when the instrument bears on the head (5) of the contra-angle (4).

4. Canal preparation device according to any one of the preceding claims, **characterised in that** the head (5) has the shape of a diamond or oval, which allows the disengagement of the snap-fastening during the bearing of the head (5) on the latter.

5. Canal preparation device according to any one of the preceding claims, **characterised in that** the instrument (2) can be made of steel.

6. Canal preparation device according to any one of the preceding claims, **characterised in that** the head (5) of the contra-angle (4) is made from a material that can only be used once.

7. Canal preparation device according to any one of the preceding claims, **characterised in that** the rotational drive (6) can be a pinion.

## Patentansprüche

1. Vorrichtung zur Wurzelkanalbearbeitung mit einem Träger (1), mit einem Wurzelkanalbehandlungsinstrument (2), das mit einem Hals (3) ausgestattet ist, und mit einem Winkelstück (4), das mit einem Kopf (5) ausgebildet ist, und bei der der Hals (3) des Wurzelkanalinstrumentes (2) mit einem Drehantriebsmittel (6) ausgestattet ist, und bei der der Kopf (5) des Winkelstückes (4) an seiner Grundseite mit einem Verrastmittel ausgebildet ist, das mit dem Hals (3) des Drehantriebsmittels derart zusammenwirkt, dass durch einfaches Anliegen der Hals (3) des Drehantriebsmittels (6) mit dem Kopf in Eingriff ist, wodurch das Verrasten des Halses (3) und des Kopfes (5) sichergestellt ist.

2. Vorrichtung zur Wurzelkanalbearbeitung nach Anspruch 1, **dadurch gekennzeichnet, dass** der Kopf (5) des Winkelstückes (4) aus einem Material hergestellt ist, das ein Verformen an der Grundseite gestattet.

3. Vorrichtung zur Wurzelkanalbearbeitung nach einem der vorangehenden Ansprüche, **dadurch gekennzeichnet, dass** eine ovale oder rautenartige Gestalt bei Anliegen des Instrumentes an dem Kopf (5) des Winkelstückes (4) den Durchtritt des Halses (3) des Instrumentes (2) gestattet.

4. Vorrichtung zur Wurzelkanalbearbeitung nach einem der vorangehenden Ansprüche, **dadurch gekennzeichnet, dass** der Kopf (5) eine rautenartige oder ovale Gestalt hat, was das Freigeben des Verrastmittels bei Anliegen des Kopfes (5) an diesem gestattet.

5. Vorrichtung zur Wurzelkanalbearbeitung nach einem der vorangehenden Ansprüche, **dadurch gekennzeichnet, dass** das Instrument (2) aus einem Stahl sein kann.

6. Vorrichtung zur Wurzelkanalbearbeitung nach einem der vorangehenden Ansprüche, **dadurch gekennzeichnet, dass** der Kopf (5) des Winkelstückes (4) aus einem Material hergestellt ist, das eine Einmalverwendung gestattet.

7. Vorrichtung zur Wurzelkanalbearbeitung nach einem der vorangehenden Ansprüche, **dadurch gekennzeichnet, dass** das Drehantriebsmittel (6) ein Eingriffsrad sein kann.
